# EUROPÄISCHE PATENTSCHRIFT

(11) **EP 0 455 272 B1**
(45) Veröffentlichungstag und Bekanntmachung des Hinweises auf die Patenterteilung: **08.05.1996**
(21) Anmeldenummer: 91111549.1
(22) Anmeldetag: 22.09.1987
(51) Int. Cl.: C08J 7/04, C08L 25/04, C09D 133/06, G02B 6/18, G11B 7/24

(54) **Verträgliche Polymermischungen**
Compatible polymer compositions
Compositions de polymères compatibles

(30) Priorität: 24.09.1986 DE 3632369
(43) Veröffentlichungstag der Anmeldung: 06.11.1991
(62) Teilanmeldung aus: 87113794.9
(73) Patentinhaber: RÖHM GMBH, D-64293 Darmstadt (DE)
(72) Erfinder: Siol, Werner, Dr., W-6100 Darmstadt (DE); Terbrack, Ulrich, W-6107 Reinheim 2 (DE)

(56) Entgegenhaltungen:
- DE-A- 1 609 777

## Beschreibung

### Gegenstand der Erfindung

Die Erfindung betrifft Gegenstände, die gebildet werden aus einem Styrol als Monomer enthaltendem Polymer, das mit einem Überzug aus einem Cyclohexyl(meth)acrylat als Monomer enthaltenden Polymer versehen ist.

### Stand der Technik

In der Regel gelten unterschiedliche Polymerspecies als nicht miteinander verträglich, d.h. unterschiedliche Polymerspecies bilden bis hinab zu geringen Anteilen einer Komponente im allgemeinen keine homogene Phase aus, die durch völlige Mischbarkeit der Komponenten charakterisiert wäre.

Neuere Ergebnisse über "Polymer Blends" und mögliche Anwendung derselben werden von L.M. Robeson in Polym. Engineering & Science 24 (8) 587 - 597 (1984) berichtet. Polystyrol sowie andere Styrol enthaltende Polymere gelten als mit Polymethylmethacrylat unverträglich. Ebensowenig sind andere Polymethacrylate und Polyacrylate mit Polystyrol zu transparenten Kunststoffen abmischbar. Dies gilt z.B. für Polyethylmethacrylat, Polybutylmethacrylat, Polyisobutylmethacrylat, Poly-neopentylmethacrylat, Polyhexylmethacrylat und viele andere. Vgl. auch R.H. Somani and M.T. Shaw, Macromolekules 14, 1549 - 1554 (1981). Mechanische Abmischungen von Polymeren (Polyblends) haben in bestimmten Fällen und auf bestimmten Gebieten der Kunststoffindustrie zu eigenschaftsmäßig verbesserten Kunststoffprodukten geführt (vgl. Kirk-Othmer 3rd Ed. Vol. 18, pp 443 - 478, J. Wiley 1982). Die physikalischen Eigenschaften solcher "Polyblends" stellen gewöhnlich einen Kompromiß dar, der unter dem Strich eine Verbesserung gegenüber den Eigenschaften der individuellen Polymeren bedeuten kann. Dabei haben **multiphasische** Polymermischungen eine ungleich größere kommerzielle Bedeutung erlangt als die verträgliche Mischungen (vgl. Kirk-Othmer loc.cit. pg 449).

### Aufgabe und Lösung

Multiphasische und verträgliche Polymermischungen sind somit sowohl hinsichtlich ihrer physikalischen als auch ihrer anwendungstechnisch relevanten, insbesondere ihrer optischen Eigenschaften (Transparenz, Klarheit usw.) streng auseinanderzuhalten. Wie bereits ausgeführt, setzt öfters mangelnde Verträglichkeit dem Abmischen von Kunststoffen mit dem Ziel, dadurch ein verbessertes Gesamt-Eigenschaftsspektrum zu erreichen, enge Grenzen. Dies schien auch für die beiden Polymerklassen der Polystyrole und der Polyalkyl(meth)acrylate zuzutreffen. [Vgl. W.A. Kruse et al. Makromol. Chem. 177, 1145 (1976), sowie R.H. Somani and M.T. Shaw, Macromolecules 14, 1549 bis 1554 (1981)]. Die Erfindung beruht auf der Erkenntnis, daß Mischungen aus Polystyrolen und Polycyclohexylmethacrylat oder Polycyclohexylacrylat miteinander verträglich sind.

Die vorliegende Erfindung betrifft daher Gegenstände, die gebildet werden aus einem Polystyrol A) das zu wenigstens 20 und bis zu 100 Gew.-% aus Styrol und 80 bis 0 Gew.-% an weiteren mit Styrol copolymerisierbaren Monomeren aufgebaut ist, (=Polymer A) das mit einem Überzug eines Poly(meth)acrylats B) versehen ist, das zu mindestens 10 und bis zu 100 Gew.-% aus den Monomeren der Formel I 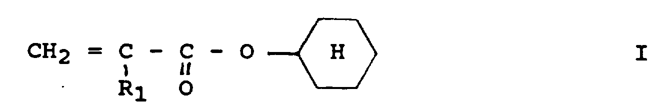 worin R₁ für Wasserstoff oder Methyl steht und 90 bis 0 Gew.-% an weiteren mit den Monomeren der Formel I copolymerisierbaren Monomeren aufgebaut ist (=Polymer B) mit der Maßgabe, daß das Polymer A) allenfalls einen α-Methylstyrolgehalt unter 20 Gew.-% besitzt und daß der Anteil der sehr polaren Monomeren gebildet aus der Gruppe bestehend aus (Meth)acrylnitril, Maleinsäureanhydrid, Maleinsäureimid, p-(2-Hydroxylhexafluoreisopropyl)styrol und Allylalkohol unter 10 Gew.-% liegt.

Wie aus dem weiteren hervorgeht sind Polymer A) und Polymer B) stets vom Typ her gemäß ihren bestimmenden Komponenten eindeutig voneinander verschieden, so daß nach den Erfahrungen des Standes der Technik Kompatibilität nicht zu erwarten war.

Nach vorliegenden Befunden ist die Verträglichkeit der aus A) und B) gebildeten Mischungen sogar so gut, daß bei einer Temperatur von 200 Grad C und darüber keine Entmischung eintritt. Besonders erwähnt sei die Ausführungsart mit Polystyrol als Polymerkomponente A) und Polycyclohexylacrylat oder Polycyclohexylmethacrylat als Polymerkomponente B). Sowohl das Polymer A) als das Polymer B) lassen sich in gewissem Rahmen durch Copolymerisation mit geeigneten Comonomeren variieren. Passende Comonomere finden sich z.B. im Kunststoff-Handbuch, Herausgeber R. Vieweg u. G. Daumiller, Band V, Carl Hanser Verlag 1969, S. 104 - 108. Geeignete Comonomere für die Komponente B) sind Acryl- bzw. Methacrylsäureester, im allgemeinen solche von nicht alicyclischen Alkoholen mit 1 - 12 Kohlenstoffatomen, insbesondere Alkanolen. Daneben Acryl- und Methacrylsäureester von gegebenenfalls substituierten cyclischen Alhoholen mit 4, 5, 7, 8, 9, 10, 11 oder 12 Kohlenstoffatomen im Ring sowie Acryl- und Methacrylsäureester von substituierten Cyclohexanolen mit insgesamt 7 bis 12 Kohlenstoffatomen. Unter den gegebenenfalls vorhandenen Substituenten seien insbesondere C₁ - C₄-Alkylreste verstanden.

Des weiteren kommen andere mit Cyclohexyl(meth)acrylat copolymerisierbare Monomere als Comonomere in Frage. Besonders genannt sei das Methylmethacrylat als Comonomeres. Der Anteil von Cyclohexylacrylat und/oder Cyclohexylmethacrylat am Gehalt der Polymerkomponente B liegt in der Regel im Bereich 100 - 10 Gew.-%, besonders bevorzugt im Bereich von 90 - 20 Gew.-% und ganz besonders bevorzugt im Bereich von 80 - 30 Gew.-%.

Ebenso ist nach vorliegenden Befunden ein wechselseitiger Ersatz der unter der allgemeinen Formel I einerseits bzw. der unter der allgemeinen Formel II 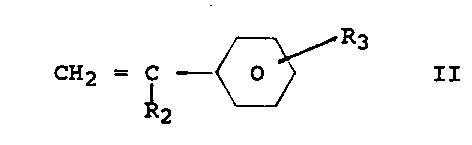 worin R₂ für Wasserstoff oder Methyl und R₃ für einen Alkylrest CₙH₂ₙ₊₁ mit n = 1 - 8 steht, andererseits zulässigen Monomeren untereinander möglich.

Der Anteil der Monomeren der Formel II am Polymer A liegt - falls vorhanden - im Bereich 1 - 20 Gew.-%.

So kann das Styrol im Polymerisat A) zu einigen Gew.-%, z.B. 10 Gew.-% durch p-Methylstyrol substituiert werden. Darüber hinaus ist im gewissen Umfang ein Austausch des Styrols durch andere alkylsubstituierte, insbesondere C₁ - C₄-alkylsubstituierte Styrole wie beispielsweise m-Methylstyrol, p-tert. Butyl-Styrol, α-Methylstyrol möglich. In der Regel ist der Anteil an diesen Monomeren kleiner als 20 Gew.-%. Ebenso kann das Styrol durch Ester der Acrylsäure und der Methacrylsäure teilweise ersetzt werden, vor allem durch Ester von C₁ - C₁₈-Alkoholen, vorzugsweise von C₁ - C₈-Alkanolen. Ferner kann das Styrol in untergeordneter Menge durch andere Vinylverbindungen, insbesondere Vinylester ersetzt werden, wie z.B. Vinylacetat und Vinylpropionat.
Dabei ist darauf zu achten, daß der Styrolgehalt an der Polymerkomponente A) wenigstens 20 Gew.-%, bevorzugt jedoch wenigstens 50 Gew.-%, besonders bevorzugt wenigstens
90 Gew.-% und ganz besonders bevorzugt wenigstens
99 Gew.-% ausmacht.

Während die Polymerkomponente A) mit anderen hydrophoben Vinylverbindungen also weitestgehend modifiziert werden kann, ist der Anteil an sehr polaren Monomeren, wie z.B. (Meth)Acrylnitril, Maleinsäureanhydrid, Maleinsäureimiden, p-(2-Hydroxylhexafluoroisopropyl)styrol oder Allylalkohol sehr begrenzt. Der Anteil dieser polaren Monomeren sollte von 0 bis unter 10 Gew.-%, insbesondere unter 5 Gew.-% an dem Polystyrol A) betragen. Besonders bevorzugt sind solche Polymere A, die weniger als 0,1 Gew.-% dieser polaren Monomeren enthalten, vorzugsweise 0 Gew.-%. Gleichermaßen kann im Polymerisat B) das Cyclohexylmethacrylat durch Cyclohexylacrylat ersetzt werden. Die Variationen werden sich dabei in aller Regel nach den Erfordernissen des jeweiligen Einsatzgebietes richten. In der Regel ist eine Verträglichkeit der Polymeren A) mit den Polymeren B auch dann noch gegeben, wenn auch das Polymere A) Cyclohexyl(meth)acrylat und/oder das Polymere B) auch Styrol enthält. Dabei ist der Styrolgehalt des Polymeren A) jedoch deutlich höher als der Styrolgehalt des Polymeren B). In der Regel ist die Differenz des Styrolgehalts (Gew.-% Styrol in Polymer A) minus Gew.-% Styrol im Polymer B) größer als 10 Gew.-%, bevorzugt größer als 30 Gew.-%, besonders bevorzugt größer als 50 Gew.-% und ganz besonders bevorzugt größer als 90 Gew.-%.
Ebenso ist der Cyclohexyl(meth)acrylatgehalt des Polymeren B) deutlich höher als der Cyclohexyl(meth)-acrylatgehalt des Polymeren A). So enthält Polymer A) in der Regel weniger als 5 Gew.-% Cyclohexyl(meth)acrylat, bevorzugt weniger als 0,1 Gew.-%. Für den Fall, daß auch Polymer A) Cyclohexyl(meth)acrylat enthält, gilt, daß der Quotient: (Gehalt an Cyclohexyl(meth)acrylat in Polymer B/ Gehalt an Cyclohexyl(meth)acrylat in Polymer A) > 2, bevorzugt > 5 und ganz besonders bevorzugt > 10 ist.
Ferner gilt, daß der Gehalt an Monomeren der Formel I im Polymer B und der Gehalt an Styrol im Polymeren A vor allem dann gering sein kann, wenn die übrigen Monomerbausteine im Polymer A und im Polymer B chemisch weitgehend übereinstimmen.

Die **Charakterisierung der Verträglichkeit bei den ver-verträglichen** Polymeren erfolgt nach den anerkannten Kriterien (Vgl. Kirk-Othmer, loc.cit, Vol 18, pp 457 - 460; J. Brandrup, E.H. Immergut, Polymer Handbook, 2. Ed. J. Wiley 1975, pg. III-211).

### Herstellung der Polymerisate A) und B)

Die Herstellung der Polymerisate A) und B) kann nach den bekannten Regeln der Polymerisation und nach bekannten Verfahren erfolgen. Die Polymeren vom Typ A) können z.B. nach Houben-Weyl, Methoden der Organischen Chemie, 4. Auflage, Bd. XIV/1, pp 761 - 841, Georg Thieme-Verlag (1961) hergestellt werden. Sie sind auch in geeigneter Form im Handel erhältlich. Dabei kann vorzugsweise das radikalische, aber auch ionische Polymerisationsverfahren zu Anwendung kommen. Die Molgewichte M der erfindungsgemäß eingesetzten Polymeren A) liegen in der Regel oberhalb von 3 000, vorzugsweise ab oder oberhalb von 5 000, besonders bevorzugt im Bereich von 5 000 bis 1 000 000, insbesondere von 20 000 bis 500 000 (Bestimmung durch Lichtstreuung). Es sei indessen betont, daß die Molgewichte die Eignung nicht kritisch zu beeinflussen scheinen. Dies gilt sowohl für die Homo- als auch die Copolymerisate der Typen A) und B). Für eine Verträglichkeit von Polymer A) und Polymer B) ist die Taktizität der Polymeren von gewisser Bedeutung. In der Regel ist insbesondere ein Polymeres B) mit einem geringen Anteil an isotaktischen Triaden (wie es beispielsweise durch radikalische Polymerisation erhalten wird) gegenüber Polymeren mit einem hohen isotaktischen Anteil, wie es durch spezielle ionische Polymerisation erzeugt wird, bevorzugt.
Die Herstellung der Homo- bzw. Copolymerisate B) erfolgt nach bekannten Verfahren.(Vgl. H. Rauch-Puntigam, Th. Völker Acryl- und Methacrylverbindungen, Springerverlag 1967). Wenn auch prinzipiell eine Herstellung durch anionische Polymerisation oder Group-Transfer-Polymerisation (siehe auch O.W. Webster et al., J. Am. Chem. Soc., 105, 5706 (1983)) möglich ist, so ist doch die bevorzugte Herstellungsform die radikalische Polymerisation.

Die Molgewichte M der Polymerisate B) liegen in der Regel oberhalb von 3 000 vorzugsweise ab oder oberhalb von 5 000, im allgemeinen vorzugsweise im Bereich von 10 000 bis 1 000 000, besonders vorzugsweise 20 000 bis 500 000, insbesondere 20 000 bis 300 000 (Lichtstreuung). Bei der Auswahl der Monomerkomponenten, die als Comonomere bei B) eingesetzt werden sollen, ist darauf zu achten, daß die Glastemperatur Tg des resultierenden Polymerisats die technische Anwendbarkeit nicht einschränkend beeinflußt.

### Vorteilhafte Wirkungen

Im folgenden steht "Polystyrol" bzw. "Polycyclohexyl(meth)acrylat"stellvertretend für die unter die Polymeren A) bzw. B) fallenden Möglichkeiten
1) Durch Umhüllung von Polystyrol mit Polycyclohexyl(meth)acrylat ist die Herstellung einer optischen Gradientenfaser möglich:
   Dabei erhält man folgende Daten:
   - Kern :: Polystyrol Brechungsindex n_{D} = 1,59
   - Mantel :: Polycyclohexyl(meth)acrylat n_{D} = 1,51 In der Regel wird man als Mantel - schon wegen der hohen Sprödigkeit von Polycyclohexylmethacrylat -Cyclohexyl(meth)acrylat-haltige Copolymere (z.B. mit MMA) verwenden, wodurch der Brechungsindex des Mantels noch niedriger wird.
   - Übergang:: Kontinuierlich. Diese Zone entspricht einer Polymermischung PM. Der Kern gehorcht der Definition von A, der Mantel entspricht der Definition von B.

   Derartige Fasern können z.B. als Lichtleitkabel Verwendung finden.
2) Gegenstände aus Polystyrol mit einem dünnen Mantel aus Polycyclohexyl(meth)acrylat, insbesondere aus einem Polycyclohexyl(meth)acrylat mit (einpolymerisiertem) UV-Absorber sind zugänglich. Im Gegensatz zu nicht umhülltem Polystyrol sind solche Gegenstände witterungsstabil. Das ansonsten gravierende Problem der Wiederverwendung heterogen beschichteter Kunststoffabfälle entfällt, da Abfälle aufgrund der guten Verträglichkeit wieder eingearbeitet werden können. In der Regel werden die Gegenstände aus Polystyrol durch Spritzen, Pressen, Extrudieren, Walzen oder Gießen hergestellt. Der Mantel aus Polymer B wird in der Regel durch Lackieren oder durch Coextrudieren aufgebracht.
3) Platten aus Polystyrol mit einem Überzug aus Polycyclohexyl(meth)acrylat lassen sich herstellen. Platten mit einem derartigen Aufbau weisen gegenüber unbehandelten Polystyrolplatten eine um ca. 2 % verbesserte Lichtdurchlässigkeit auf. In der Regel weisen Platten mit einem Überzug aus Polycyclohexyl(meth)acrylat auch eine bessere Kratzfestigkeit und eine veränderte Korrosionsbeständigkeit auf. Besonders interessant sind Mehrfachstegplatten, wie sie beispielsweise zum Verglasen von Gewächshäusern eingesetzt werden, die aus Polystyrol hergestellt worden sind und einen Überzug aus einem Cyclohexyl(meth)acrylat-haltigen Polymeren (=Polymer B) aufweisen. (DE-A 16 09 777) Weiter können Verklebungen von Polystyrolen mit dem Polymer B oder vorteilhaft mit Cyclohexylacrylat enthaltenden Monomeren/Initiator-Mischungen durchgeführt werden. Hier kann die hohe Polymerisationsgeschwindigkeit der Acrylate mit der guten Polymerverträglichkeit kombiniert werden. Derartige Objekte sind zu betrachten als erfindungsgemäß erfaßte Festkörper mit einer Polymerkonfiguration, aufgebaut aus einer Schicht aus Polymer A, einer zweiten Schicht aus Polymer B und einer Zwischenschicht aus einer verträglichen Polymermischung PM bestehend aus
   A) 0,1 bis 99,9 Gew.-% eines Polystyrols, das zu 20 bis 100 Gew.-% aus Styrol und zu 80 bis 0 Gew.-% aus mit Styrol copolymerisierbaren Monomeren, und
   B) 99,9 bis 0,1 Gew.-% eines Poly(meth)acrylats das zu 10 bis 100 Gew.-% aus Monomeren der Formel I und zu 90 bis 0 Gew.-% aus mit Monomeren der Formel I copolymerisierbaren Monomeren aufgebaut ist.

Ähnlich sind Objekte aus Abfallmaterial oder mit einem Gehalt an Abfallmaterial zu betrachten, etwa wenn Abfallmaterial PM in ein Polymer A eingebaut wird. Sie gehorchen der Definition, derzufolge eine verträgliche Polymermischung PM als Schicht abgedeckt wird von einer Deckschicht aus dem zweiten Polymer.

In all den vorgenannten Objekten soll die Deckschicht vorzugsweise 0,1 bis 20 Gew.-% (bezogen auf die Deckschicht) mindestens eines UV-Absorbers in zweckmäßiger Verteilung enthalten. Brauchbare UV-Absorber werden z.B. in Kirk-Othmer, Encyclopedia of Chemical Technologie, 3^{rd} Ed. Vol. 23, pp. 615-627, J.Wiley 1983; R. Gächter u. H. Müller, Taschenbuch der Kunststoff-Additive, Carl Hanser Verlag 1979, S. 90 bis 143; Ullmann's Encyclopädie der Techn. Chemie, 4. Auflage, Band 15, S. 256 - 260, Verlag Chemie 1978, US-A 4 576 170, angegeben.

Die folgenden Beispiele dienen zur Erläuterung der Erfindung.

Die Bestimmung der VICAT-Erweichungstemperatur erfolgt nach DIN 53460.
Die Bestimmung der reduz. Viskosität (nspec/_{c}) in Anlehnung an DIN 1342, DIN 51562 und DIN 7745. Die Bestimmung der Lichtdurchlässigkeit kann- sofern nicht anders vermerkt- nach DIN 5036 vorgenommen werden. Die Trübung (haze) wird in % (ASTM D 1003) angegeben.

### BEISPIELE

### Allgemeine Vorschrift zur Synthese der Polymeren B

Die Monomeren werden unter Zusatz von 0,15 % AIBN Azoisobuttersäurenitril und 0,33 % Dodecylmercaptan bei 60 Grad C bis zu einem geringen Umsatz (ca. 20 Gew.-%) in sauerstoffreier Atmosphäre polymerisiert. Danach werden die Polymeren in Methanol gefällt, anschließend in Methylenchlorid gelöst und nochmal in Methanol gefällt. Anschließend wurde im Vakuumtrockner getrocknet.

### Beispiel 1

### Beschichtung einer Polystyrolplatte mit einem Polymeren B

Eine Monomerenmischung bestehend aus Methylmethacrylat, Cyclohexylmethacrylat, Methylacrylat wird bis zu einem Umsatz von weniger als 40 % polymerisiert und das entstehende Polymere isoliert.
Charakterisierung des Polymeren:
- Zusammensetzung:: 57 % Methylmethacrylat,
33 % Cyclohexylmethacrylat,
10 % Methylacrylat.
- Molekulargewicht:: ca. 100 000.

Von diesem Methylmethacrylat-Cyclohexylmethacrylat-Methylacrylat-Copolymeren wird eine 15 %ige Lösung in Diacetonalkohol/1-Methoxy-2-propanol = 1/1 hergestellt, der 0,1 Gew.-% 2-Hydroxy-4n-octoxybenzophenon als UV-Absorber zugesetzt sind. Mit diesem Lack wird eine 3 mm dicke Polystyrolplatte (Abmessungen: 20 cm x 20 cm) tauchbeschichtet (40 cm/min) und anschließend 2 h bei 90 Grad C getrocknet.

Es resultiert eine klare Platte, die gegenüber der Ausgangsplatte eine ca. 2 % höhere Lichtdurchlässigkeit aufweist. Ebenso zeigt die beschichtete Platte deutlich verbesserte Wischfestigkeit.

### Beispiel 2

### Wiedereinarbeitung in Abfälle

Standardpolystyrol wird zu 20 Gew.-% mit gemahlenen Plattenabfällen der beschichteten Plattenabschnitte gemäß Beispiel 1 gemischt. Diese Mischung wird zu 3 mm dicken, klaren Platten extrudiert. Diese Platten werden wie in Beispiel 17 beschrieben mit einer 15 %igen Lösung des UV-Absorber-haltigen Lackes (Polymer B) beschichtet. Die Eigenschaften der so erhaltenen Platten entsprechen denen der gemäß Beispiel 1 enthaltenen Platten.

Die vorliegenden Erfahrungen belegen die außerordentlich gute Verträglichkeit des Polycyclohexyl(meth)acrylats mit Polystyrol, die es ermöglicht, nicht nur das spröde und somit wirtschaftlich unbedeutende Polycylohexyl(meth)acrylat selbst, sondern auch andere Polymere, insbesondere Poly(meth)acrylate durch eine vergleichsweise geringe Modifikation mit Cyclohexyl(meth)acrylat mit Polystyrol verträglich zu machen.
Schon aus Kostengründen wird man den Cyclohexyl(meth)acrylatgehalt des Polymeren B) möglichst gering halten. Damit ergibt sich eines der interessantesten erfindungsgemäßen Anwendungsgebiete, nämlich der Oberflächenschutz von Polystyrol beispielsweise durch Lackieren mit Polymer B).
Gerade hier sind minimale Polymermengen B), beispielsweise 0,5 Gew.-% bezogen auf Polymer A) ausreichend, so daß bei der Wiedereinarbeitung nur sehr geringe Mengen von Polymer B) in Polymer A) eingearbeitet werden müssen. Während einerseits der Gehalt an Cyclohexyl(meth)acrylat im Polymer B) möglichst gering gehalten wird, ist andererseits ein Polymer A) mit einem möglichst hohen Gehalt an Polystyrol, z.B. reines Polystyrol bzw. schlagzäh-modifiziertes Polystyrol (Vgl. Vieweg-Daumiller, Kunststoff-Handbuch Band V, Polystyrol, Carl Hanser, München 1969) bevorzugt.

### Beispiel 3

### Witterungsschutz von Polymer A durch eine Beschichtung mit lichtschutzmittelhaltigen Polymeren B).

Auf eine 3 mm dicke, extrudierte Platte aus Polymer A) (Polystyrol 158 K® der BASF) wird eine 20 %-ige Lösung des Polymeren B lackiert.

Polymer B: Copolymeres aus
49 Gew.-% Methylmethacrylat
49 Gew.-% Cyclohexylmethacrylat
2 Gew.-% Cyclohexylacrylat

nspec/c = 36

Lösungsmittel: Mischung aus:
40 % 2-Propanol
40 % Diacetonalkohol
20 % Methylethylketon

Lichtschutzmittel: 10 Gew.-% bezogen auf Polymer B

Probe C: Lichtschutzmittel:
2-Hydroxy-4-methoxybenzophenon

Schichtdicke: ca. 10 um

Probe D: Schichtdicke: ca. 10 um

Probe H: Lichtschutzmittel:
2(2'-HYdroxy-5'-t-octylphenyl)-benzotriazol
Schichtdicke: ca. 10 um.
Die Haftung der Schicht ist in allen Fällen sehr gut (kein Abriß im Tesafilmtest).
Probe L: unbeschichtete Vergleichsprobe.

Die beschichteten Polystyrolplatten sowie die unbeschichtete Referenzplatte wurde der Schnellbewitterung unterzogen.
- Bedingung:: Xenotest, Grenzwellenlänge: 300 mm (nach DIN 53 387)
- Zeit:: 1 000 Stunden.
Während die ungeschützte Polystyrollplatte nach dieser Zeit an der bewitterten Oberfläche völlig zerstört ist (Probe L), sind die mit UV-Schutzmittel enthaltendem Polymer B beschichteten Proben auch nach 1000 h Xenotest völlig unverändert.

## Patentansprüche

1. Gegenstände, die gebildet werden aus einem Polystyrol A, das zu wenigstens 20 und bis zu 100 Gew.-% aus Styrol, welches mit einem Überzug eines Poly(meth)acrylats B, das zu mindestens 10 und bis zu 100 Gew.-% aus den Monomeren der Formel I 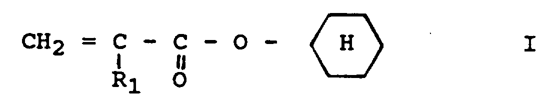 worin R₁ für Wasserstoff oder Methyl steht, aufgebaut ist, mit der Maßgabe, daß das Polymer A allenfalls einen α-Methylstyrolgehalt unter 20 Gew.-%, und einen Anteil an modifizierenden polaren Monomeren gebildet aus der Gruppe bestehend aus (Meth)acrylnitril, Maleinsäureanhydrid, Maleinsäureimiden, p-(2-Hydroxylhexafluoroisopropyl)styrol und Allylalkohol unter 10 Gew.-% besitzt, versehen ist.

2. Gegenstände gemäß Anspruch 1, dadurch gekennzeichnet, daß das Polymer B einen gegebenenfalls einpolymerisierten UV-Absorber in Anteilen von 0,1 - 20 Gew.-% (bezogen auf das Polymer B) enthält.

3. Spritzgegossene Formkörper gemäß den Ansprüchen 1 und 2.

4. Extrudierte Formkörper gemäß den Ansprüchen 1 und 2.

5. Datenspeicherplatte, insbesondere für optisch ablesbare Information, gemäß Ansprüchen 3 und 4

6. Optische Gradientenfaser mit einem Kern aus Polymer A und einer Hülle aus Polymer B und einer Zwischenschicht aus einer verträglichen Polymermischung aus dem Polystyrol A und dem Poly(meth)acrylat B gemäß Anspruch 1.

## Claims

1. Articles formed from a polystyrene A which is synthesised, in an amount of at least 20 and up to 100 wt.%, from styrene provided with a coating of a poly(meth)acrylate B which is synthesised, in an amount of at least 10 and up to 100 wt.%, from monomers of Formula I 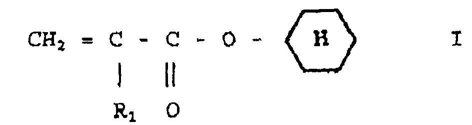 wherein R₁ is hydrogen or methyl, with the proviso that the Polymer A optionally has an α-methyl styrene content of below 20 wt.% and an amount of modifying polar monomers formed from the group consisting of (meth)acrylonitrile, maleic acid anhydride, maleic acid imides, p-(2-hydroxyhexafluoroisopropyl)styrene and allyl alcohol of below 10 wt.%.

2. Articles according to Claim 1, characterised in that the Polymer B contains an ultraviolet absorber in amounts of 0.1 to 20 wt.% (based on the Polymer B), which may be homopolymerised.

3. Injection-moulded articles according to Claims 1 and 2.

4. Extruded articles according to Claims 1 and 2.

5. Data storage plate, more particularly for optically readable information, according to Claims 3 and 4.

6. Optical gradient fibre with a core made of Polymer A and a covering made of Polymer B and an intermediate layer of a compatible polymer mixture made of polystyrene A and poly(meth)acrylate B according to Claim 1.

## Revendications

1. Objets qui sont formés d'un polystyrène A qui est composé, pour 20% en poids au moins et jusqu'à 100% en poids, de styrène qui est garni d'un revêtement en un poly(méth)acrylate B qui se compose, pour 10% en poids au moins et jusqu'à 100% en poids, des monomères de formule I 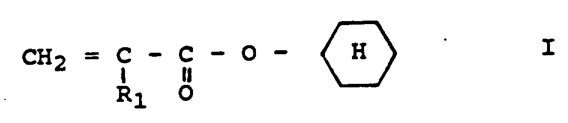 dans laquelle R₁ est mis pour un atome d'hydrogène ou un groupement méthyle, étant spécifié que le polymère A a tout au plus une teneur en α-méthylstyrène de moins de 20% en poids et une proportion inférieure à 10% en poids de monomères polaires modificateurs choisis dans le groupe constitué par le (méth)acrylonitrile, l'anhydride maléique, les maléimides, le p-(2-hydroxyhexafluoroisopropyl)styrène et l'alcool allylique.

2. Objets selon la revendication 1, caractérisés en ce que le polymère B contient, éventuellement en liaison polymère, un agent absorbant l'UV dans des proportions de 0,1 à 20% en poids (par rapport au polymère B).

3. Corps moulés par injection selon les revendications 1 et 2.

4. Corps moulés par extrusion selon les revendications 1 et 2.

5. Disques de mémorisation de données, en particulier pour des informations lisibles optiquement, selon les revendications 3 et 4.

6. Fibres optiques à gradient d'indice, comprenant une âme en polymère A, une enveloppe en polymère B et une couche intermédiaire en un mélange de polymères compatible, composé du polystyrène A et du poly(méth)acrylate B selon la revendication 1.
